# FASCICULE DE BREVET EUROPEEN

(11) **EP 2 002 529 B1**
(45) Date de publication et mention de la délivrance du brevet: **04.05.2011**
(21) Numéro de dépôt: 07726708.6
(22) Date de dépôt: 08.03.2007
(51) Int. Cl.: H02K 21/44

(54) **MACHINE ÉLECTRIQUE À COMMUTATION DE FLUX ET À DOUBLE EXCITATION**
ELEKTRISCHE MASCHINE MIT FLUSSUMSCHALTUNGS-DOPPELERREGUNG
FLUX-SWITCHING DUAL-EXCITATION ELECTRICAL MACHINE

(30) Priorité: 08.03.2006 FR 0602058
(43) Date de publication de la demande: 17.12.2008
(73) Titulaire: CENTRE NATIONAL DE LA RECHERCHE SCIENTIFIQUE (CNRS), 75016 Paris (FR)
(72) Inventeur: HOANG, Emmanuel, Kiên, Lôc, F-75010 Paris (FR); LECRIVAIN, Michel, Roger, René, F-94200 Ivry sur Seine (FR); GABSI, Mohamed, F-94230 Cachan (FR)
(74) Mandataire: Callon de Lamarck, Jean-Robert
(86) Numéro de dépôt international: PCT/EP2007/052167
(87) Numéro de publication internationale: WO 2007/101876

(56) Documents cités:
- EP-A1- 0 394 527
- FR-A1- 2 295 610
- FR-A1- 2 762 158
- FR-A1- 2 769 422
- US-A- 3 984 711

## Description

La présente invention se rapporte d'une façon générale aux machines électriques tournantes, telles que les alternateurs pour véhicules automobiles.

En particulier, la présente invention se rapporte à des machines tournantes à commutation de flux.

On sait que ce type de machine présente de nombreux avantages comme par exemple celui de pouvoir s'affranchir d'une utilisation classique de balais qui accroissent le coût de revient ainsi que les défauts de fonctionnement engendrés notamment du fait de leur usure.

D'une manière générale, les machines tournantes à commutation de flux possèdent un rotor et un stator.

Tous les moyens électriquement et magnétiquement actifs de la machine sont situés uniquement dans le stator.

Ce dernier est en particulier le seul à comporter des bobinages d'induit et des aimants permanents.

Ainsi, le rotor étant dépourvu de ces moyens actifs, il est généralement constitué, au moins principalement, d'un ensemble de tôles ferromagnétiques.

Un tel rotor offre notamment l'avantage d'autoriser des vitesses de rotation très importantes puisque, comparé à des rotors du type comprenant des moyens actifs, il est notamment d'aspect uniforme.

On connaît par ailleurs des machines de ce type qui offrent la possibilité de régler leur excitation.

Un tel réglage fait que ces machines sont plus adaptées notamment à une utilisation en tant qu'alternateur pour véhicules, car la vitesse de rotation dans ces derniers peut être extrêmement variable.

A cet égard le document FR 2 769 422 propose une machine tournante à commutation de flux dans laquelle la régulation de l'excitation est rendue possible en combinant dans le stator au moins un aimant permanent apte à établir localement un flux magnétique bouclant sur lui même dans une direction circonférentielle du stator et au moins un bobinage d'excitation apte à établir localement un flux magnétique réglable dans une direction circonférentielle inverse de celle du flux produit par le ou les aimants.

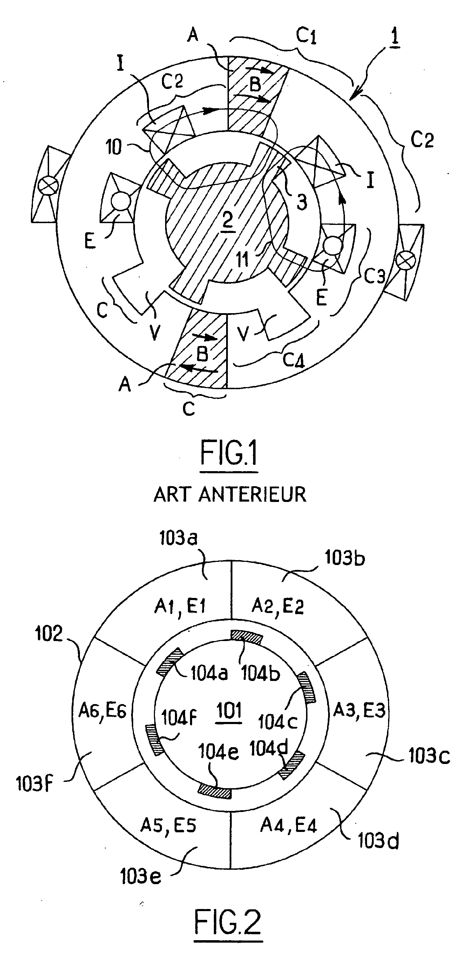

Plus précisément, tel que représenté sur la figure 1, le stator 1 comporte une succession de cellules élémentaires C destinées chacune à interagir avec une dent 3 à la fois du rotor 2 et comprenant chacune soit un aimant A, soit une encoche E recevant une partie d'un bobinage d'excitation, soit une encoche I recevant une partie d'un bobinage de l'induit, soit une encoche vide V.

Les aimants A sont agencés de sorte que les champs B qui y règnent soient polarisés dans le même sens.

En l'occurrence, sur la figure 1 ces champs sont tous polarisés dans une direction circonférentielle dans le sens des aiguilles d'une montre.

Une telle machine tournante permet de faire varier l'amplitude des flux magnétiques engendrés dans le stator, en jouant sur la valeur d'un courant qui circule dans les bobinages d'excitation.

Bien qu'ayant rendu de nombreux services, une telle machine présentent néanmoins certains inconvénients.

En particulier, un inconvénient d'un tel agencement des éléments actifs dans le stator est qu'il engendre, notamment par la présence des brins, un encombrement trop important.

Par ailleurs, la construction du stator est relativement complexe du fait de croisements nécessaires entre des brins des différents bobinages, ce qui pénalise en particulier le processus d'industrialisation.

En outre selon les orientations des champs B choisies dans cette machine, l'entraînement en rotation du rotor nécessite que le courant d'excitation dans les bobinages d'excitation soit supérieur à zéro, ce qui pénalise le rendement de la machine.

Un but de l'invention est de proposer une machine tournante à commutation de flux à double excitation qui pallie aux inconvénients de l'état de la technique.

En particulier un but de l'invention est de fournir une machine tournante à commutation de flux à double excitation dont la construction est simplifiée.

Un autre but de l'invention est de fournir une machine de ce type avec des performances améliorées, notamment en termes de couple.

Un autre but de l'invention est de fournir une machine à double excitation avec une compensation locale du flux et donc des inductions limitant ainsi les pertes fer. Ce résultat est particulièrement bénéfique à hautes vitesses.

A cet effet, on propose selon l'invention une machine électrique à commutation de flux, comportant un stator et un rotor, le stator comportant des aimants permanents, des bobinages d'induit et d'excitation, et le rotor étant dépourvu de bobinage et d'aimant permanent et comportant une pluralité de dents de commutation de flux, caractérisée en ce que le stator est généralement formé par une succession de cellules élémentaires, destinées chacune à interagir avec une seule dent à la fois du rotor, et comprenant chacune :
- l'un des aimants permanents, et
- une première encoche pour loger au moins en partie l'un des bobinages d'excitation au moins,
- des deuxièmes encoches pour loger l'un des bobinages d'induit.

Des aspects préférés mais non limitatifs de cette machine sont les suivants :
- dans chaque, l'aimant permanent et la première encoche sont alignés suivant une direction radiale ;
- pour chaque cellule élémentaire, les bobinages d'excitation et l'aimant permanent sont disposés dans la même première encoche ;
- dans chaque cellule, les deuxièmes encoches sont à une distance radiale sensiblement égale, par rapport à un axe de rotation du rotor;
- les deuxièmes encoches s'étendent de part et d'autre de l'aimant permanent;
- chaque cellule élémentaire comprend en outre un premier matériau formant portion de circuit magnétique localisé à la périphérie du stator et prévu pour refermer au moins partiellement un flux généré par les bobinages d'excitation et/ou par les aimants permanents ;
- le premier matériau formant portion de circuit magnétique possède une épaisseur e, telle que la force magnétique du ou des bobinages d'excitation est supérieure ou égale à une valeur seuil prédéterminée ;
- chaque cellule comporte en outre au moins un deuxième matériau ferromagnétique séparant l'aimant permanent du bobinage de l'induit ;
- les premier et deuxième matériaux sont d'un bloc et forment sensiblement un U tourné vers l'axe de rotation du rotor ;
- dans chaque cellule, l'aimant permanent et la première encoche forment généralement un T, vu à partir de l'axe de rotation du rotor ;
- les bobinages d'excitation sont subdivisés dans les premières encoches de deux cellules élémentaires adjacentes.

D'autres aspects, buts et avantages de l'invention apparaîtront mieux à la lecture de la description suivante de l'invention, faite en référence aux dessins annexés sur lesquels :
- la figure 1 déjà commentée, montre schématiquement une machine tournante à commutation de flux à double excitation de l'état de la technique,
- la figure 2 illustre schématiquement une machine tournante selon l'invention avec ses cellules élémentaires réparties autour du rotor suivant un périmètre du stator,
- la figure 3, montre schématiquement en plan et vu suivant une direction parallèle à l'axe de rotation du rotor, deux cellules agencées selon un mode préféré de l'invention,
- la figure 4 montre en perspective le stator selon le mode de réalisation préféré de l'invention,
- la figure 5 montre une vue agrandie du stator de la figure 4,
- la figure 6, montre schématiquement une vue en plan, et selon la direction de l'axe de rotation du rotor, la machine selon le mode de réalisation préféré de l'invention,
- la figure 7 illustre les flux magnétiques impliqués dans des cellules lorsque le courant d'excitation est sensiblement nul,
- la figure 8 illustre les flux magnétiques impliqués dans ces cellules lorsque le courant d'excitation est positif,
- la figure 9 illustre les flux magnétiques impliqués dans ces cellules lorsque le courant d'excitation est négatif,
- la figure 10 montre graphiquement à titre d'exemple non limitatif l'amplitude du flux de la machine selon l'invention avec et sans aimant permanent dans le stator, et ce en fonction d'un courant d'excitation fourni dans les bobinages d'excitation, et
- la figure 11, montre graphiquement à titre d'exemple non limitatif le couple de la machine en fonction d'un angle électrique, dans les conditions où le stator comporte les bobinages d'excitation seulement, les aimants permanents seulement, ou la combinaison des bobinages et des aimants précités.

En se référant à la figure 2, on a représenté schématiquement une machine tournante 100 à commutation de flux et à double excitation selon l'invention.

La machine comporte un rotor 101 muni d'une pluralité de dents 104 et entouré par un stator 102.

Le stator comporte, à titre d'exemple non limitatif, six cellules élémentaires 103a à 103f distribuées suivant le périmètre du stator et donc autour du rotor.

Par principe, dans ce texte, chaque cellule est définie comme étant apte à interagir avec une seule parmi lesdites dents du rotor 101.

Par exemple, on voit que dans la configuration angulaire du rotor présentée à la figure 2, la cellule 103a interagit uniquement avec la dent 104a et ainsi de suite.

Chaque cellule élémentaire 103 comporte un aimant permanent Ai et une première encoche pour loger au moins en partie un ou plusieurs bobinages d'excitation Ei.

Un tel agencement permet facilement qu'au sein d'une même cellule les champs magnétiques générés par l'aimant Ai et le bobinage d'excitation Ei se compensent localement.

Ainsi, de manière avantageuse, il est possible très simplement de réduire les pertes électromagnétiques de la machine.

En effet, dans chacune des cellules les champs peuvent avoir une amplitude très grande, mais la résultante au sein de celle-ci peut être réduite par un agencement approprié dudit aimant et dudit bobinage.

A titre d'exemple non limitatif, si l'on suppose que ce dernier génère un premier champ de 1,0 Teslas en sens opposé à un deuxième champ de 1,5 Teslas généré par l'aimant, la résultante au sein de la cellule est de 0,5 Teslas dans le sens du deuxième champ.

Au contraire, dans un agencement où chaque cellule ne comporte pas la combinaison de l'aimant et du bobinage d'excitation, et en particulier si la cellule comporte l'aimant Ai et sa cellule adjacente le bobinage Ei, le champ résultant au sein de chaque cellule est maximal, à savoir égale à celui généré par le moyen actif dans la cellule en question (d'un côté le champ généré par l'aimant permanent Ai, de l'autre celui par le bobinage Ei).

Ainsi dans une telle machine, les pertes sont importantes.

On va maintenant décrire plus en détails un mode de réalisation préféré de l'invention.

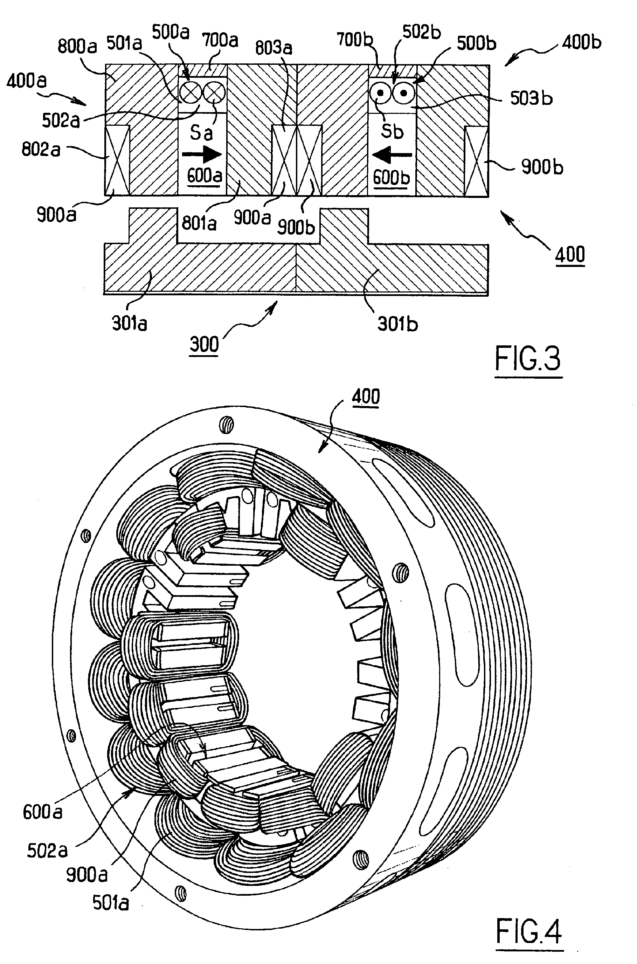

A cet égard on se référera d'abord à la figure 3 sur laquelle on a représenté schématiquement une partie seulement de la machine.

Plus précisément on peut y voir deux dents 301a et 301b d'un rotor 300 interagissant avec deux cellules élémentaires 400a et 400b d'un stator 400, respectivement.

Chaque dent est en regard d'une région de la cellule correspondante qui se situe à une distance du centre de rotation du rotor la plus proche.

En considérant maintenant, à titre d'exemple non limitatif, la cellule élémentaires 400a, celle-ci comporte une encoche 500a pour loger une partie 501a et 502a de deux bobinages d'excitation 501 et 502.

Ces parties 501a et 502a sont logées respectivement à gauche et à droite de l'encoche lorsque l'on considère le sens des aiguilles d'une montre par rapport à l'axe de rotation du rotor ou de la machine.

Les brins de ces bobinages sont aptes à être parcourus par un courant dirigé dans le sens désigné par le symbole Sa.

Tel que représenté dans cette cellule, le courant dans les deux parties de bobinage 501a et 502a est donc censé sortir de l'encoche par le haut du plan de la figure.

Bien entendu, ceci n'exclut par le fait que les courants dans ces bobinages puissent dans une autre représentation liée à une autre condition de fonctionnement de la machine être dirigés en sens inverse, par exemple.

Dans la cellule adjacente 400b, on a également prévu une encoche 500b pour loger une autre partie de l'un des bobinages précédents.

En particulier, la cellule 400b étant située à droite de la cellule 400a, l'encoche 500b loge une autre partie 502b du bobinage 502, car comme indiqué précédemment ce bobinage étant logé à droite de l'encoche 500a, le trajet entre les parties gauche et droite des encoches respectives 500a et 500b est le plus court.

Bien entendu, le bobinage 501 dans la cellule 400a possède une autre partie dans l'encoche d'une autre cellule adjacente non représentée.

Plus précisément, ce bobinage 501 étant logé à gauche dans l'encoche 500a ladite autre partie est naturellement logée dans l'encoche de la cellule directement adjacente à gauche (non représentée).

Cette remarque vaut également pour la cellule adjacente à droite de la cellule 400b et ainsi de suite.

En particulier, l'encoche 500b loge dans sa région gauche la partie 502b du bobinage 502 et, dans sa région droite, une partie 503b d'un autre bobinage 503, cette autre partie de ce dernier étant logée, à son tour, dans la région gauche de l'encoche d'une cellule (non représentée) qui se trouve deux fois à droite de la cellule 400b.

On remarquera d'après la figure 3 encore, que la partie 502b étant parcourue dans l'encoche 500b par le même courant que celui dans la partie 502a, cette fois-ci, celui-ci est dirigé en vers le dessous du plan de la figure dans la cellule 400b (comme indiqué par le symbole Sb).

En plus de l'encoche 500a, la cellule 400a comporte une encoche pour loger un aimant permanent 600a.

Cette encoche et l'encoche 500a sont alignées dans une direction radiale par rapport au centre du rotor.

De préférence, ces deux encoches sont disposées adjacentes dans cette direction.

Par ailleurs, la somme de leur hauteur respective (dans la direction radiale) est presque égale à la hauteur de la cellule.

Cette dernière hauteur est en fait sensiblement plus grande du fait de la présence dans ledit alignement radial d'un premier matériau ferromagnétique 700a d'une hauteur e.

On parlera par la suite de cette hauteur e en la désignant par l'épaisseur e.

Plus précisément, ce matériau est adjacent à l'encoche 500a du bobinage d'excitation 501 et 502 de sorte à amplifier de manière contrôlée une force magnétique de ce bobinage lorsqu'il est parcouru par le courant.

Le contrôle de cette force est rendu possible en jouant notamment sur l'épaisseur e.

Ainsi, au moment de la conception de la machine on déterminera cette épaisseur e en fonction d'autres éléments de la cellule et selon une valeur minimale choisie de la force souhaitée.

L'ensemble constitué par l'encoche 500a, l'aimant 600a et le premier matériau s'étendent dans ladite direction radiale sensiblement au centre de la cellule 400a.

De part et d'autre de cet ensemble, c'est-à-dire à gauche et à droite, on a prévu deux deuxièmes matériaux ferromagnétiques 800a et 801a.

Ceux-ci sont solidaires du premier matériau 700a et de préférence ils sont tous trois d'un seul bloc.

Un avantage est que par construction simple de ces trois matériaux en particulier le stator de l'invention possède une très bonne rigidité.

Par ailleurs, le premier et les deuxièmes matériaux forment sensiblement un U tourné vers le bas.

C'est dans l'ouverture du U que l'on dispose les deux parties des deux bobinages d'excitation et l'aimant permanent.

Les deuxièmes matériaux comportent chacun une deuxième encoche 802a et 803a pour loger un bobinage d'induit 900a.

Ces encoches, de forme identique, sont disposées symétriquement par rapport à un axe radial, de part et d'autre de l'aimant permanent.

En particulier, elles sont agencées dans un décrochement prévu dans les deuxièmes matériaux.

En outre, elles sont agencées de telle sorte que le bobinage 900a puisse entourer cet aimant.

Ainsi à titre d'exemple, le bobinage d'induit 900a peut être enroulé vers le dessous du plan de la figure, dans l'encoche 802a située à gauche de l'ensemble, et vers le haut dans l'encoche 802a située à droite dudit ensemble.

Et la liaison entre ces deux encoches est définie par deux têtes de bobinage non représentées, où les brins sont enroulés respectivement vers la gauche et vers la droite pour passer devant les deuxièmes matériaux et l'aimant permanent 600a.

On notera que ces têtes plus les deux parties d'un bobinage d'excitation logées dans deux encoches forment un bobinage complet.

On notera aussi que, de préférence, la hauteur des encoches 802a et 803a est sensiblement égale à celle de l'aimant permanent 600a.

Par ailleurs, toujours selon le mode préféré de l'invention, la deuxième encoche 803a communique avec la deuxième encoche située à gauche dans la cellule 400b.

Ce principe de communication s'applique également à la deuxième encoche 802a avec l'encoche qui est à droite dans la cellule non représentée qui se trouve à gauche de ladite cellule 400a.

En référence aux figures 4 à 6, on peut voir respectivement le stator dans son ensemble dépourvu du premier matériau pour des raisons de lisibilité de la figure, une vue agrandie de ce stator et, une vue en plan moins schématique que la figure 3 discutée ci-dessus du stator et du rotor selon le mode de réalisation préféré de l'invention.

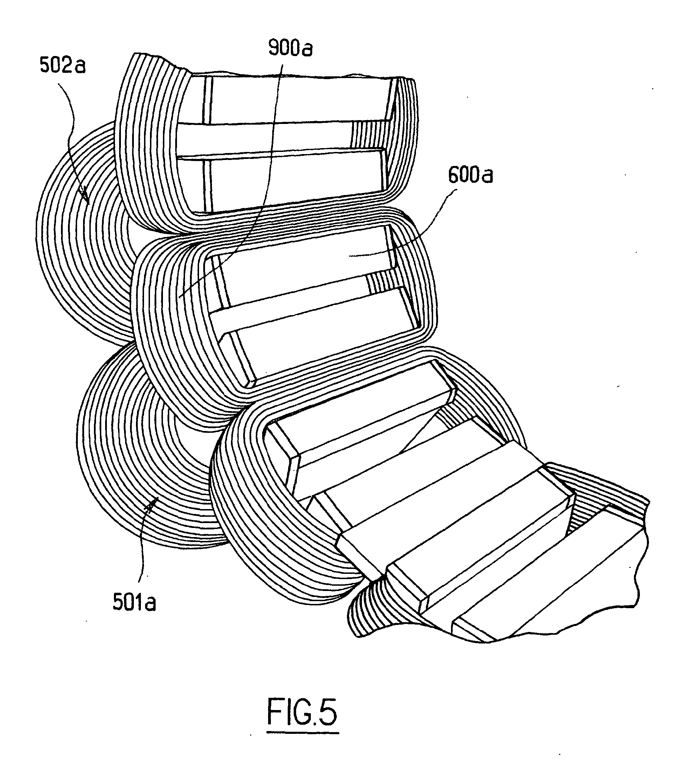

On peut voir en particulier, sur les figures 4 et 5, la disposition dans la structure annulaire du stator :
- des bobinages dans chaque cellule d'induit et d'excitation, et
- des encoches d'aimants dans chaque cellule.

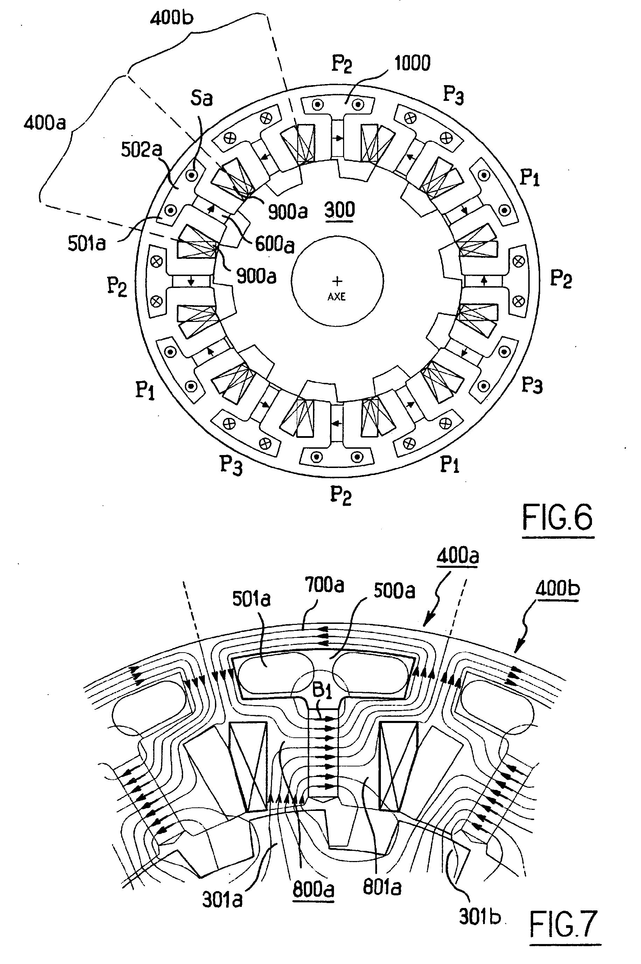

Par ailleurs, sur ces figures et en particulier sur la figure 6, on voit que dans chaque cellule ledit ensemble, à savoir l'aimant permanent (ou son encoche) et le bobinage d'excitation (ou la première encoche prévu pour loger ce bobinage), ont généralement la forme d'un T (voir la référence 1000 sur la figure 6 qui désigne une cellule dans laquelle ledit ensemble a été hachuré).

On peut voir également de façon plus détaillée que sur la figure 3, l'alternance des sens des courants dans les bobinages, et ce par le biais des symboles du type du symbole Sa et Sb précité.

On peut voir en outre l'agencement des trois phases P1 à P3 nécessaires à la machine de type triphasé présentée ici à titre d'exemple non limitatif.

On va maintenant décrire le fonctionnement de la machine réalisée selon le mode préféré de l'invention.

A titre préliminaire, le fonctionnement du rotor avec le stator ne sera pas décrit en détails dans la mesure où ce fonctionnement est classique et connu en soi dans les machines à commutation de flux.

Ainsi, on notera simplement pour la compréhension du texte qui suit, que le stator étant fixe, le rotor est, lui, amené à tourner autour de son axe par le biais d'une variation contrôlée des champs magnétiques dans le stator et des courants dans les bobinages d'induit au stator.

La figure 7 montre schématiquement, au niveau d'une cellule élémentaire, les flux magnétiques impliqués dans ladite rotation du rotor.

Par ailleurs, il est important de noter que cette figure illustre ces flux lorsque les courants d'excitation dans les bobinages d'excitation sont inférieurs à une valeur seuil prédéterminée et lorsque, ainsi, les champs magnétiques engendrés par ces bobinages sont négligeables par rapport à ceux générés par les aimants permanents.

En considérant à titre d'exemple non limitatif la cellule 400a, le champ magnétique de l'aimant permanent 600a est noté B1.

Au niveau de cet aimant, les lignes de flux s'étendent suivant le périmètre du stator, et ce, de gauche à droite dans cet exemple.

On voit en outre que les aimants permanents dans la machine ont été agencés de telle sorte que le champ B1 dans une cellule est orienté en sens opposé aux champs respectifs B1 dans les deux cellules adjacentes à la cellule en question.

Par exemple dans la cellule 400a, le champ B1 est orienté au niveau de l'aimant dans le sens des aiguilles d'une montre, tandis que dans les cellules adjacentes, par exemple dans la cellule 400b, le champ est orienté dans le sens trigonométrique.

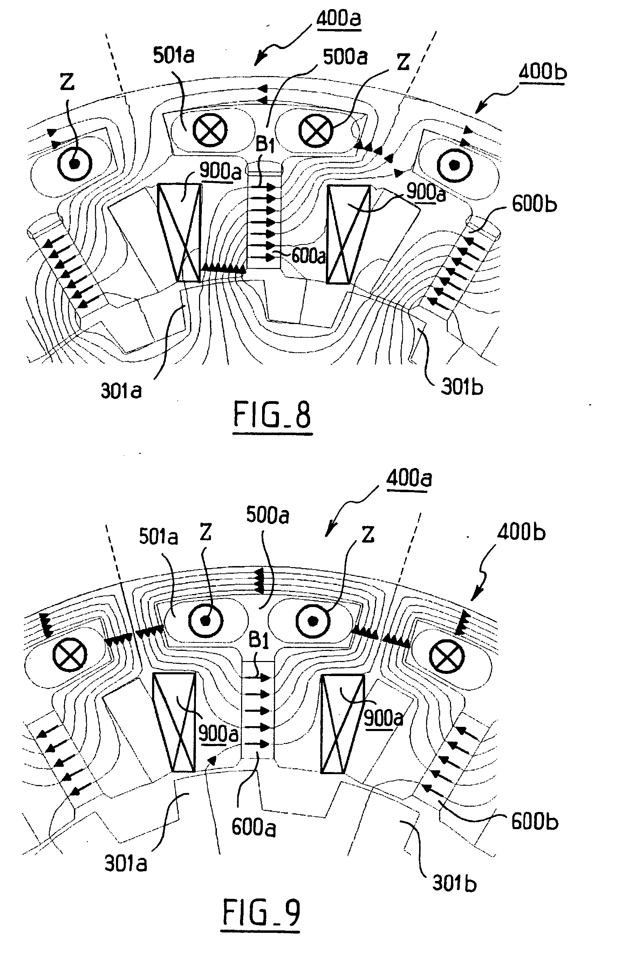

Dans la configuration angulaire du rotor présenté à titre d'exemple non limitatif sur la figure 7 (ainsi que les figures 8 et 9), une partie des lignes du champ magnétique B1, en particulier une partie qui est la plus proche de l'encoche 501a de bobinage d'excitation, parcourt le deuxième matériau ferromagnétique 801a en passant autour de ladite encoche 500a dans le sens trigonométrique pour revenir à l'aimant permanent.

Il passe donc à travers le premier matériau 700a puis à travers le deuxième matériau 800a.

Une autre partie des lignes de champ, en particulier une partie située sensiblement à équidistance de l'encoche 501a et de la dent 301a du rotor, traverse l'aimant permanent dans le sens des aiguilles d'une montre suivant ledit périmètre et tend à rejoindre le parcours décrit ci-dessus.

Par ailleurs, les lignes qui traversent l'aimant proviennent de la dent 301a du rotor.

Elles correspondent à des lignes de champs qui sont associées à au moins l'une des cellules adjacentes et qui passent par le rotor.

En particulier, selon cette configuration angulaire, certaines de ces lignes proviennent de l'aimant permanent de la cellule à gauche, d'autres de l'aimant permanent de la cellule à droite.

On notera que ces lignes peuvent aussi correspondre à certaines parmi celles qui seront décrites ci-après.

Une dernière partie des lignes de champ, en particulier une partie qui est la plus proche de la dent 301a, traverse l'aimant permanent dans le sens des aiguilles d'une montre et parcourt le deuxième matériau 801a en se dirigeant cette fois-ci vers le rotor.

Dans cette configuration angulaire, la dent 301b, en regard alors de la cellule 400b, est à une distance de l'aimant telle que certaines parmi ces dernières lignes de champ (mais dans cet exemple une faible proportion seulement) peuvent parcourir cette dent 301b, la périphérie du rotor, et ressortir de ce dernier pas la dent 301a pour reboucler au niveau de l'aimant permanent 600a.

Toutefois, dans cette configuration encore, une grande proportion de ces lignes reboucle localement sur l'aimant permanent sans passer par le rotor.

Bien entendu, la description ci-dessus n'est pas exhaustive et sert plutôt d'illustration.

L'homme du métier comprendra en particulier que, de part les phénomènes physiques impliqués, il serait vain et sans doute fort peu utile d'essayer de décrire de façon extrêmement précise tous les flux présents dans la machine.

La figure 8 montre les flux dans la même partie de la machine, mais les bobinages d'excitation, par exemple ceux dans l'encoche 500a de bobinage, sont parcourus par un courant d'excitation positif (voir les symboles Z).

On entend par courant positif un courant orienté dans un sens tel que le champs électromagnétique engendré par le bobinage d'excitation s'ajoute au moins en partie au champ de l'aimant permanent de sorte à accroître le flux dans les bobinages d'induit.

Dans ce cas, et dans la configuration angulaire précitée du rotor, la plupart des lignes de champs traversant l'aimant permanent viennent de la dent 301a.

Et plus précisément, ces lignes peuvent provenir des aimants permanents des deux cellules adjacentes après avoir traversées le rotor et en particulier les dents en regard de ces deux cellules.

De l'autre côté de l'aimant permanent, une partie des lignes de champs se propage dans le premier matériau 700b de la cellule 400b pour reboucler sur l'aimant 600b, après avoir contournée en partie l'encoche 500b.

Et l'autre partie de ces lignes contourne par la droite l'encoche 500a en passant notamment dans le premier matériau 700a, puis se propage dans la cellule adjacente à gauche en direction de son aimant permanent.

Il existe ainsi principalement un bouclage défini successivement par l'aimant 600a, le premier matériau 700b, l'aimant 600b, la dent 301b et la dent 301a.

Et il existe un autre bouclage avec l'aimant 600a, le premier matériau 700a, l'aimant de la cellule à gauche, la dent en regard de cette dernière et la dent 301a.

En référence à la figure 9, on a illustré encore à titre d'exemple non limitatif les flux dans la même partie de la machine, mais les bobinages d'excitation, par exemple ceux dans l'encoche 500a, sont parcourus par un courant d'excitation négatif (voir les symboles Z).

Dans ce cas, la plupart des flux ne passent plus par le rotor et en particulier par ses dents.

Et les flux rebouclent à l'intérieur d'une même cellule sans passer par une autre cellule.

Plus précisément, les flux dans une cellule forment une seule boucle à l'intérieure de celle-ci, passant en particulier par l'aimant permanent (par exemple 600a), contournant l'encoche de bobinage d'excitation à travers notamment le premier matériau (par exemple 700a dans le sens trigonométrique) pour revenir finalement sur l'aimant.

Comme l'aura compris l'homme du métier, les flux magnétiques décrits à partir des figures 7 à 9 sont tels qu'ils permettent de contrôler le flux magnétique dans les bobinages d'induit du stator.

En particulier, lorsqu'un courant négatif parcourt les bobinages d'excitation, le flux magnétique dans les bobinages d'induit a tendance à s'annuler, tandis que lorsque ce courant est positif, il a tendance au contraire à augmenter.

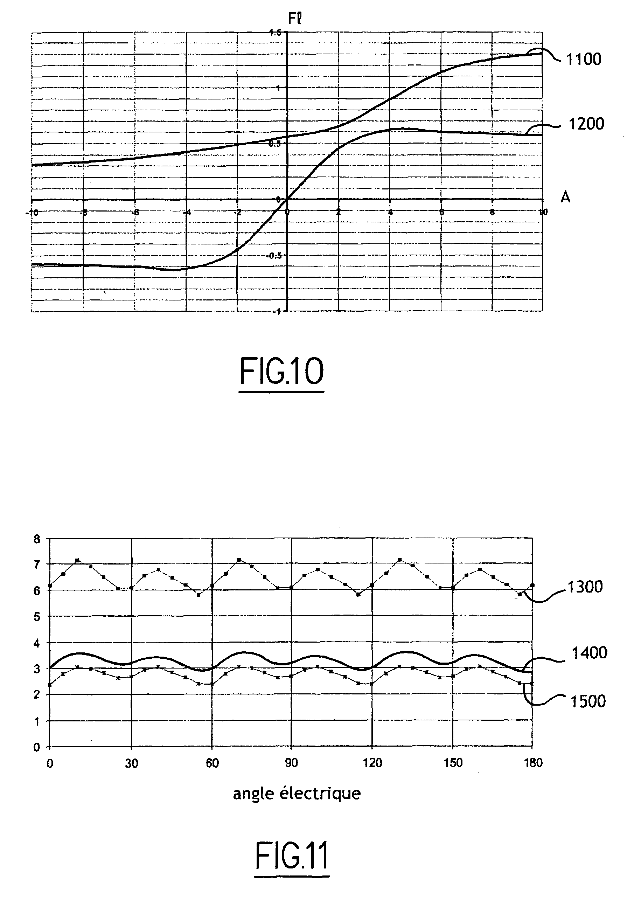

En référence à la figure 10, on peut observer, à titre d'illustration et de façon non limitative, une variation de l'amplitude des flux (ordonnées) en fonction de l'amplitude du courant d'excitation (abscisses).

Afin d'illustrer par ailleurs un intérêt de la combinaison d'un aimant permanent avec un bobinage d'excitation, cette figure comporte une première courbe 1200 qui correspond à la machine dépourvue d'aimant permanent dans chacune des cellules, et une deuxième courbe 1100 qui correspond à la machine réalisée selon le mode préféré de l'invention.

On notera ici que les valeurs des coordonnées sur les axes ne sont à considérer qu'à titre indicatif seulement.

Comme on peut le voir, l'amplitude des flux sur la courbe 1100 est toujours supérieure à celle sur la courbe 1200, ce qui montre une amélioration des performances de la machine, notamment en termes de couple.

A cet égard, sur la figure 11 on montre graphiquement l'évolution du couple en fonction de l'angle électrique selon trois cas différents.

Dans le premier cas illustré par la courbe 1500, la machine fonctionne grâce aux bobinages d'excitation seulement, c'est-à-dire que les aimants permanents ne sont pas actifs, et ceux dans les bobinages d'induit sont alternatifs, fonction de la position angulaire du rotor.

Dans le deuxième cas illustré par la courbe 1400, seuls les aimants permanents sont actifs, c'est-à-dire que le courant dans le bobinage d'excitation est négligeable ou nul. Le couple pour faire tourner le rotor de la machine est créé par l'interaction des courants dans les bobinages d'induit et des flux dus aux aimants permanents.

Enfin, dans le troisième cas illustré par la courbe 1300, on combine l'action des aimants permanents, des bobinages d'excitation et des bobinages d'induit.

Comme on pouvait s'y attendre, la combinaison des moyens actifs précités offre un meilleur couple.

Plus précisément encore, on peut constater que, contrairement à toute attente et à la surprise de la demanderesse, la courbe 1300 est supérieure à une simple superposition des courbes 1400 et 1500.

En d'autres termes, la machine selon le mode préféré de l'invention bénéficie d'effets de synergie avantageux qui lui confère des performances en couple bien supérieures à une simple addition des couples obtenus pour les premier et deuxième cas susmentionnés.

A cet égard, la demanderesse pense que, la compensation locale dans chaque cellule du champ magnétique susmentionnée contribue dans une certaine mesure à un tel effet.

Bien entendu, la présente invention n'est nullement limitée à la forme de réalisation décrite ci-dessus et représentée sur les dessins.

En particulier, on peut selon une variante du mode de réalisé présenté jusqu'ici disposer les éléments différemment au sein d'une cellule.

Par exemple, on peut intervertir les positions de l'encoche 500a du bobinage d'excitation et de l'encoche 600a de l'aimant permanent, de sorte que ce dernier se retrouve finalement le plus éloigné du rotor.

On notera alors que le deuxième matériau 700a devra être disposé de préférence sur la périphérie interne de la cellule, c'est-à-dire à son extrémité basse vu du centre de rotation, ou encore entre la dent du rotor et l'encoche 500a.

Selon une autre variante, on pourra utiliser des cellules agencées selon le mode préféré de l'invention, et d'autres cellules agencées selon la variante précédente.

Selon une autre variante, on logera dans l'encoche 500a une partie d'un unique bobinage d'excitation (et non deux parties de deux bobinages selon le mode préféré).

Et une autre partie de ce bobinage sera logée exclusivement dans l'encoche 500b de la cellule adjacente 400b.

Selon une autre variante encore, on isolera les encoches 900a de bobinage d'induit qui sont adjacentes entre deux cellules.

Au vu de ce qui précède, les avantages de la présente invention sont faciles à percevoir, certains ayant d'ailleurs déjà été présentés.

En ce qui concerne en particulier la facilité de fabrication et l'encombrement, il apparaît clairement d'après la description et en particulier d'après les dessins que ces aspects sont nettement améliorés.

Un telle amélioration est notamment due aux agencements des bobinages les uns vis-à-vis des autres, en particulier aux croisements limités entre les différents brins et à l'utilisation du premier matériau en tant qu'élément impliqué à la fois dans les performances électriques et mécaniques (rigidité, etc.) de la machine.

## Revendications

1. Machine électrique à commutation de flux, comportant un stator (400) et un rotor (300), le stator comportant des aimants permanents (600a, 600b), des bobinages d'induit (900a, 900b) et d'excitation (501, 502), et le rotor étant dépourvu de bobinage et d'aimant permanent et comportant une pluralité de dents de commutation de flux (301a, 301b), **caractérisée en ce que** le stator est généralement formé par une succession de cellules élémentaires (400a, 400b), destinées chacune (400a) à interagir avec une seule dent à la fois du rotor, et comprenant chacune :
- l'un des aimants permanents (600a),
- une première encoche (500a) pour loger au moins en partie l'un (501a) des bobinages d'excitation (501) au moins, et
- des deuxièmes encoches (802a, 803a) pour loger l'un (900a) des bobinages d'induit.

2. Machine selon la revendication 1, **caractérisée en ce que**, dans chaque cellule (400a), l'aimant permanent (600a) et la première encoche (500a) sont alignés suivant une direction radiale.

3. Machine selon l'une des revendications précédentes, **caractérisée en ce que**, dans chaque cellule, les bobinages d'excitation et l'aimant permanent sont disposés dans la même première encoche (500a).

4. Machine selon l'une des revendications précédentes, **caractérisée en ce que**, dans chaque cellule (400a), les deuxièmes encoches (802a, 803a) sont à une distance radiale sensiblement égale, par rapport à un axe de rotation du rotor (300).

5. Machine selon l'une des revendications précédentes, **caractérisées en ce que** les deuxièmes encoches (802a, 803a) s'étendent de part et d'autre de l'aimant permanent (600a).

6. Machine selon l'une des revendications précédentes, **caractérisé en ce que** chaque cellule élémentaire comprend en outre un premier matériau formant portion de circuit magnétique (700a), localisé à la périphérie du stator, et prévu pour refermer au moins partiellement un flux (B1) généré par les bobinages d'excitation et/ou par les aimants permanents.

7. Machine selon la revendication 6, **caractérisée en ce que**, le premier matériau formant portion de circuit magnétique (700a) possède une épaisseur e, telle que la force magnétique du ou des bobinages d'excitation (501a, 502a) est supérieure ou égale à une valeur seuil prédéterminée.

8. Machine selon l'une des revendications précédentes, **caractérisée en ce que** chaque cellule (400a) comporte en outre au moins un deuxième matériau ferromagnétique (800a, 801a) séparant l'aimant permanent (600a) du bobinage de l'induit (900a).

9. Machine selon l'une des revendications 6 à 7, **caractérisée en ce que** les premier (700a) et deuxième matériaux (800a, 801a) sont d'un bloc et forment sensiblement un U tourné vers l'axe de rotation du rotor (300).

10. Machine selon l'une des revendications précédentes, **caractérisée en ce que**, dans chaque cellule (400a), l'aimant permanent (600a) et la première encoche (500a) forment généralement un T, vu à partir de l'axe de rotation du rotor (300).

11. Machine selon l'une des revendications précédentes, **caractérisé en ce que** les bobinages d'excitation sont subdivisés dans les premières encoches de deux cellules élémentaires adjacentes.

## Claims

1. A flux switching electrical machine including a stator (400) and a rotor (300), the stator including permanent magnets (600a, 600b), armature windings (900a, 900b) and excitation windings (501, 502), and the rotor not having any windings or permanent magnet, and including a plurality of flux switching teeth (301a, 301b), **characterized in that** the stator is generally formed by a succession of elementary cells (400a, 400b), each (400a) intended to interact with a single tooth of the rotor at a time, and each comprising:
- one of the permanent magnets (600a),
- a first slot (500a) to at least partly house at least one (501a) of the excitation windings (501) and;
- second slots (802a, 803a) to house one (900a) of the armature windings.

2. The machine according to claim 1, **characterized in that**, in each cell (400a), the permanent magnet (600a) and the first slot (500a) are aligned along a radial direction.

3. The machine according to one of the preceding claims, **characterized in that**, in each cell, the excitation windings and the permanent magnet are arranged in the same first slot (500a).

4. The machine according to one of the preceding claims, **characterized in that**, in each cell (400a), the second slots (802a, 803a) are at a substantially equal radial distance from an axis of rotation of the rotor (300).

5. The machine according to one of the preceding claims, **characterized in that** the second slots (802a, 803a) extend on either side of the permanent magnet (600a).

6. The machine according to one of the preceding claims, **characterized in that** each elementary cell further comprises a first material forming a portion of the magnetic circuit (700a) located at the periphery of the stator and provided for at least partially enclosing a flux (B1) generated by the excitation windings and/or the permanent magnets.

7. The machine according to claim 6, **characterized in that** the first material forming a portion of the magnetic circuit (700a) has a thickness e such that the magnetic force of the excitation winding(s) (501a, 502a) is greater than or equal to a predetermined threshold value.

8. The machine according to one of the preceding claims, **characterized in that** each cell (400a) further includes at least one second ferromagnetic material (800a, 801a) separating the permanent magnet (600a) from the winding of the armature (900a).

9. The machine according to one of claims 6 to 7, **characterized in that** the first (700a) and second materials (800a, 801a) are in a single-piece and substantially form a U turned towards the axis of rotation of the rotor (300).

10. The machine according to one of the previous claims, **characterized in that** in each cell (400a), the permanent magnet (600a) and the first slot (500a) generally form a T, as seen from the axis of rotation of the rotor (300).

11. The machine according to one of the previous claims, **characterized in that** the excitation windings are subdivided in the first slots of two adjacent elementary cells.

## Patentansprüche

1. Elektrische Maschine mit Flussumschaltung, umfassend einen Stator (400) und einen Rotor (300), wobei der Stator Dauermagneten (600a, 600b), Induktions-(900a, 900b) und Erregerspulen (501, 502) umfasst, und wobei der Rotor ohne Spule und Magnet ist und eine Vielzahl von Flussumschaltzähnen (301a, 301 b) umfasst, **dadurch gekennzeichnet, dass** der Stator im Allgemeinen aus einer Folge von elementaren Zellen (400a, 400b) gebildet ist, von denen jede dazu bestimmt ist, gleichzeitig mit einem einzigen Zahn des Rotors zu interagieren und von denen jede umfasst:
- einen der Dauermagneten (600a),
- eine erste Aussparung (500a), um wenigstens teilweise wenigstens eine der Erregerspulen (501) aufzunehmen, und
- zweite Aussparungen (802a, 803a), um eine (900a) der Induktionsspulen aufzunehmen.

2. Maschine gemäß Anspruch 1, **dadurch gekennzeichnet, dass** in jeder Zelle (400a) der Dauermagnet (600a) und die erste Aussparung (500a) entlang einer radialen Richtung ausgerichtet sind.

3. Maschine gemäß einem der vorhergehenden Ansprüche, **dadurch gekennzeichnet, dass** in jeder Zelle die Erregerspulen und der Dauermagnet in derselben ersten Aussparung (500a) untergebracht sind.

4. Maschine gemäß einem der vorhergehenden Ansprüche, **dadurch gekennzeichnet, dass** in jeder Zelle (400a) die zweiten Aussparungen (802a, 803a) in einem radialen, im Wesentlichen gleichen Abstand in Bezug auf eine Rotationsachse des Rotors (300) sind.

5. Maschine gemäß einem der vorhergehenden Ansprüche, **dadurch gekennzeichnet, dass** die zwei Aussparungen (802a, 803a) sich auf beiden Seiten des Dauermagneten (600a) erstrecken.

6. Maschine gemäß einem der vorhergehenden Ansprüche, **dadurch gekennzeichnet, dass** jede elementare Zelle außerdem ein erstes Material umfasst, das Teil des Magnetkreises (700a) ist, der am Umkreis des Stators gelegen ist und vorgesehen ist, um wenigstens teilweise einen Fluss (B1) wiederzuverschließen, der von den Erregerspulen und/oder den Dauermagneten erzeugt wird.

7. Maschine gemäß Anspruch 6, **dadurch gekennzeichnet, dass** das erste Material, das Teil des Magnetkreises (700a) ist, eine Dicke e besitzt, so dass die Magnetkraft des oder der Erregerspule(n) (501 a, 502a) größer als oder gleich einem vorbestimmten Schwellwert ist.

8. Maschine gemäß einem der vorhergehenden Ansprüche, **dadurch gekennzeichnet, dass** jede Zelle (400a) außerdem wenigstens ein zweites ferromagnetisches Material (800a, 801a) umfasst, das den Dauermagneten (600a) von der Induktionsspule (900a) trennt.

9. Maschine gemäß einem der Ansprüche 6 bis 7, **dadurch gekennzeichnet, dass** das erste (700a) und das zweite Material (800a, 801a) aus einem Block sind und im Wesentlichen ein U bilden, das in Richtung der Rotationsachse des Rotors (300) gebogen ist.

10. Maschine gemäß einem der vorhergehenden Ansprüche, **dadurch gekennzeichnet, dass** in jeder Zelle (400a) der Dauermagnet (600a) und die erste Aussparung (500a) von der Rotationsachse des Rotors (300) aus gesehen im Allgemeinen ein T bilden.

11. Maschine gemäß einem der vorhergehenden Ansprüche, **dadurch gekennzeichnet, dass** die Erregerspulen in den ersten Aussparungen von zwei benachbarten elementaren Zellen unterteilt sind.
